# EUROPEAN PATENT APPLICATION

(11) **EP 2 627 038 A1**
(43) Date of publication of application: **14.08.2013**
(21) Application number: 13153961.1
(22) Date of filing: 05.02.2013
(51) Int. Cl.: H04L 12/24, H04L 12/26

(54) **Optimization of maintenance activities in communication networks**

(30) Priority: 13.02.2012 IN DE02012418
(71) Applicant: Alcatel Lucent, 75007 Paris (FR)
(72) Inventor: Adharapurapu, Pramod, 560045 KARNATAKA (IN)
(74) Representative: Sciaux, Edmond

(57) **Abstract**

The present subject matter discloses a method for maintaining a communication network. The method comprises identifying a plurality of nodes requiring one or more maintenance activities to be performed at each of the plurality of nodes present in the communication network. The method further comprises determining an association among the plurality of nodes based on the one or more maintenance activities to be performed at each of the plurality of nodes. The method further comprises optimizing the one or more maintenance activities to be performed based on the association among the plurality of nodes.

## Description

### FIELD OF INVENTION

The present subject matter relates to communication networks and, particularly but not exclusively, to Operations, Administration and Maintenance (OAM) aspects of the communication networks.

### BACKGROUND

A communication network, such as a mobile network and a computer network is widely used to exchange information in the modern era. As known, the communication network includes nodes and communication devices coupled to the nodes. The communication devices in the communication network are communicatively coupled to one another using the nodes or network equipments present in the communication network. In one implementation, examples of the communication devices may include computers, laptops, cellular phones, smart phones, and PDAs, that communicate to one another using the nodes, such as routers, switches, bridges, hubs, servers, physical wires, transceivers, duplexers, amplifiers, radio frequency components, and other computer and mobile nodes.

To facilitate exchange of information or data between the communication devices, multiple protocols, such as the Transmission Control Protocol/Internet Protocol (TCP/IP), the User Datagram Protocol (UDP), and the Datagram Congestion Control Protocol (DCCP) are implemented in the communication network, such as the computer network; and protocols, such as ANSI-41, 3GPP, and 3GPP2 are implemented in the communication network, such as the mobile network. These protocols may be used on the Internet, intranet, a LAN, or a WAN, a MAN, and on mobile networks, such as Interim Standard (IS) 136, IS 95, and GSM standard.

In order to manage the communication network explained above, a conventional network management system (NMS) may be used. As known, functions of the conventional NMS may include fault management, configuration management, accounting management, performance management, and security management of the communication network. Fault management may include detecting, isolating, notifying, and correcting faults encountered in the communication network. Configuration management may include configuration aspects, such as configuration file management, inventory management, and software management of the nodes. Accounting management may include using and managing information generated in the communication network. Performance management may include monitoring, measuring various aspects of performance of the nodes and performing actions to maintain and improve the overall performance of the communication network. Security management may include providing access to nodes only to authorized individuals.

### SUMMARY

This summary is provided to introduce concepts related to maintaining nodes in communication networks- This summary is not intended to identify essential features of the claimed subject matter nor is it intended for use in determining or limiting the scope of the claimed subject matter.

In an embodiment, a method for maintaining a communication network is disclosed. The method comprises identifying a plurality of nodes requiring one or more maintenance activities to be performed at each of the plurality of nodes present in the communication network. The method further comprises determining an association among the plurality of nodes based on the one or more maintenance activities to be performed at each of the plurality of nodes. The method further comprises optimizing the one or more maintenance activities to be performed based on the association among the plurality of nodes

In another embodiment, a NMS for maintenance of a communication network is described. The NMS includes a processor and a memory coupled to the processor. The memory includes a Self Organizing Network (SON) module configured to identify a plurality of nodes requiring one or more maintenance activities to be performed at each of the plurality of nodes present in the communication network. The memory further includes a model generating module configured to determine an association among the plurality of nodes based on the one or more maintenance activities to be performed at each of the plurality of nodes. The memory further includes a triggering module configured to trigger the one or more maintenance activities to be performed based on the association among the plurality of nodes.

In accordance with another embodiment of the present subject matter, a computer readable medium having embodied thereon a computer program for executing a method for maintaining a communication network is disclosed. The method comprises identifying a plurality of nodes requiring one or more maintenance activities to be performed at each of the plurality of nodes present in the communication network. The method further comprises determining an association among the plurality of nodes based on the one or more maintenance activities to be performed at each of the plurality of nodes. The method further comprises optimizing the one or more maintenance activities to be performed based on the association among the plurality of nodes.

### BRIEF DESCRIPTION OF THE FIGURES

The detailed description is described with reference to the accompanying figures. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:

Figure 1 illustrates a network implementation of a Network Management System for optimizing maintenance activities in a communication network, according to an embodiment of the present subject matter;

Figures 2A and 2B are pictorial representations of a dynamic operations, administration, and maintenance (OAM) models of nodes, according to an embodiment of the present subject matter;

Figure 3 is a flowchart illustrating a method for maintaining a communication network, according to an embodiment of the present subject matter;

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or a processor, whether or not such computer or processor is explicitly shown.

### DESCRIPTION OF EMBODIMENTS

The present subject matter relates to methods and systems for optimizing maintenance activities in a communication network, such as a mobile network and a computer network. In one embodiment of the present subject matter, the system and method are based on developing a dynamic operation, administration, and maintenance (OAM) model, for the communication network, based upon maintenance activities to be performed on nodes of the communication network.

Examples of the mobile network that may implement the abovementioned methods and systems may include a Global System for Mobile Communication (GSM) network, a Code Division Multiple Access (CDMA) network, and a Public Switched Telephone Network (PSTN) network, whereas examples of the computer network that may implement the methods and systems may include local area network (LAN), or a wide area network (WAN), and metropolitan area network (MAN).

As known, numerous communication devices, such as computers, tablet computers, computing systems, laptops, cellular phones, smart phones, and PDAs are communicatively coupled to one another in a communication network using the nodes or network equipments present in the communication network. In one implementation, examples of the nodes or network equipments include but are not limited to routers, switches, bridges, hubs, servers, physical wires, transceivers, duplexers, amplifiers, radio frequency components, and other computer and mobile nodes. The abovementioned methods and systems for optimizing maintenance activities in a communication network, in one implementation, provide for optimization of maintenance activities to be performed with respect to one or more the nodes or network equipments, collectively referred to as nodes hereinafter.

Conventionally, the communication network is modeled using traditional OAM modeling. The traditional OAM modeling is static and cannot adapt to the real-time dynamic changes that a Self Organizing Network (SON) needs. A SON is a communication network which is self-configuring, self-optimizing, and self-healing network. For example, a SON may optimize the coverage and capacity of a mobile network by automatically adjusting an antenna tilt, transmitted power, etc. SON is a key driver for improved operation and maintenance of communication networks and is introduced as a part of the 3GPP Long Term Evolution (LTE) specifications.

The increased use of communication devices, such as mobile phones and computing systems requires the communication networks to work efficiently round the clock. The communication network is maintained by a conventional network management system (NMS) having the traditional OAM modeling. Managing the communication network may include fault management of the nodes of the communication network. Fault management related aspects of the conventional NMS deals with fault events, such as malfunctioning and update requirement of the nodes. Some of the fault events require a specific maintenance activity to be performed on the nodes to recover the nodes into a healthy state. Conventionally, the nodes are recovered individually based upon a user triggered command. For example, if 20 nodes are found to be faulty in the communication network, the conventional NMS may detect and enlist the 20 nodes for a network administrator, for example, on a display of the NMS. Further, the conventional NMS is also configured to provide information like details of the fault that has occurred at each of the nodes, and a corresponding maintenance activity to be performed at the nodes for fault recovery. Subsequently, the network administrator is required to look into details of each of the 20 nodes and provide instructions for the conventional NMS to proceed with execution of 20 corresponding maintenance activities for rectifying the fault at each of the nodes. Therefore, typically, a process of recovering the nodes by the conventional NMS is inefficient, error-prone and time consuming.

Further, conventionally, the communication network is modeled using traditional OAM modeling. The traditional OAM modeling is static and cannot adapt to the real-time dynamic changes that a SON needs.

In order to maintain communication networks in an efficient manner, the present subject matter provides methods and systems based upon a dynamic OAM model. The methods and systems may be used not only to maintain nodes, such as routers, switches, bridges, hubs, servers, physical wires, transceivers, duplexers, amplifiers, radio frequency components, and the like for proper functioning of the communication network but also for optimization of maintenance activities that may be required to be performed with respect to such nodes.

The methods and systems are based upon a dynamic OAM model capable of adapting to a SON. The dynamic OAM model is based upon maintenance activities to be performed on the various nodes of the SON. In accordance with an embodiment of the subject matter, the dynamic OAM model may be described as maintenance activity based modeling because, for example, when the same maintenance activity is required to be performed in more than one node present in SON, at first a hierarchy between the nodes is identified and subsequently, the maintenance activity may be performed, for instance, at a root of the dynamic OAM model. Performing a maintenance activity at the root, as evident, may eliminate the need for performing the maintenance activity at the various child nodes associated with the root that requires the same action.

For example, consider that a fault is detected in a node C and its child components A, B, and D. The remedy of such fault may be to reboot the nodes A, B, C, and D. After the nodes/components having a fault are identified, the NMS system builds a dynamic OAM model, in real time, with nodes A, B, C and D as elements of the model. In order to rectify the nodes, the maintenance activity, i.e., the reboot is performed only on the parent node C thereby eliminating the need to reboot the remaining child nodes A, B, and D and hence optimizing the maintenance activities performed on the nodes.

The above method and system are further described in conjunction with the following figures. It should be noted that the description and figures merely illustrate the principles of the present subject matter. It will thus be appreciated that those skilled in the art will be able to devise various arrangements that, although not explicitly described or shown herein, embody the principles of the present subject matter and are included within its spirit and scope. Furthermore, all examples recited herein are principally intended expressly to be only for pedagogical purposes to aid the reader in understanding the principles of the present subject matter and the concepts contributed by the inventor(s) to furthering the art, and are to be construed as being without limitation to such specifically recited examples and conditions. Moreover, all statements herein reciting principles, aspects, and embodiments of the present subject matter, as well as specific examples thereof, are intended to encompass equivalents thereof.

It will also be appreciated by those skilled in the art that the words during, while, and when as used herein are not exact terms that mean an action takes place instantly upon an initiating action but that there may be some small but reasonable delay, such as a propagation delay, between the initial action and the reaction that is initiated by the initial action. Additionally, the word "connected" is used throughout for clarity of the description and can include either a direct connection or an indirect connection.

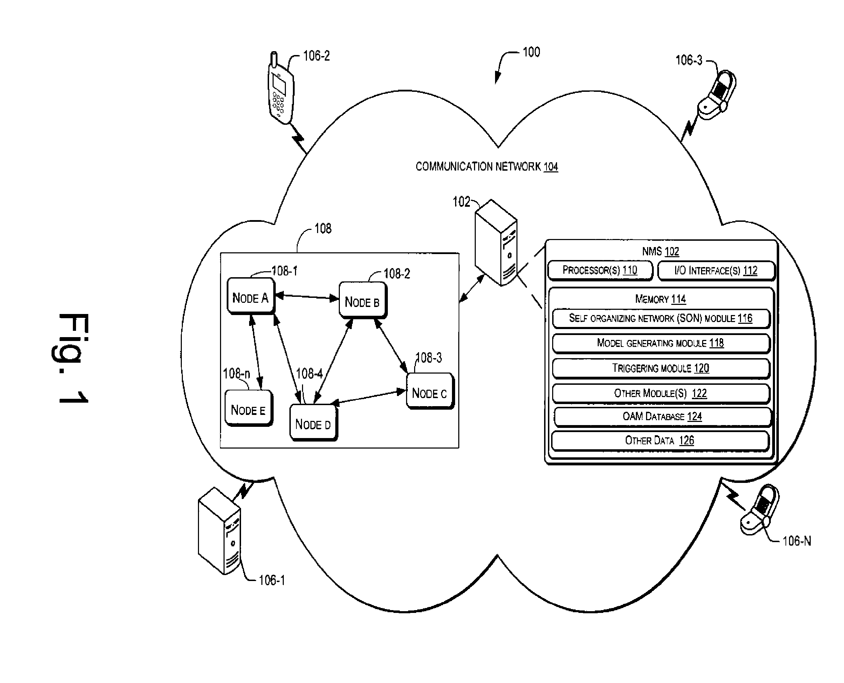

Figure 1 illustrates network implementation 100 of a Network Management System (NMS) 102 for optimizing maintenance activities in a communication network 104, according to an embodiment of the present subject matter. In one embodiment, the NMS 102 disclosed herein may be implemented in communication network 104 for optimization of maintenance activities that may be required to be performed in the communication network 104, such as a mobile network and a computer network. In the present embodiment, the communication network 104 is a Self Organizing Network.

Examples of the mobile network may include a Global System for Mobile Communication (GSM) network, a Code Division Multiple Access (CDMA) network, a Public Switched Telephone Network (PSTN) network; whereas examples of a computer network may include a local area network (LAN), a wide area network (WAN), a metropolitan area network (MAN), and the like.

Furthermore, the NMS 102 described herein may be used for various other wireless communication systems, such as Time Division Multiple Access (TDMA), Frequency Division Multiple Access (FDMA), Orthogonal Frequency-Division Multiple Access (OFDMA), Single Carrier Frequency Division Multiple Access (SC-FDMA) and other systems. A CDMA system may implement a radio technology, such as Universal Terrestrial Radio Access (UTRA), cdma2000, etc. UTRA includes variants of CDMA. cdma2000 covers IS-2000, IS-95 and IS-856 standards. A TDMA system may implement a radio technology, such as Global System for Mobile Communications (GSM). An OFDMA system may implement a radio technology, such as Evolved UTRA (E-UTRA), Ultra Mobile Broadband (UMB), IEEE 802.20, IEEE 802.16 (WiMAX), 802.11 (WiFi^{™}), Flash-OFDM^{®}, and the like. UTRA and E-UTRA are part of Universal Mobile Telecommunication System (UMTS). 3GPP Long Term Evolution (LTE) is an upcoming release of UMTS that uses E-UTRA. UTRA, E-UTRA, UMTS, LTE and GSM are described in documents from 3GPP. Likewise, cdma2000 and UMB are described in documents from "3rd Generation Partnership Project 2" (3GPP2).

Furthermore, the NMS 102 may be implemented in a variety of devices, such as desktop computers, hand-held devices, laptops or other portable computers, tablet computers, mobile phones, PDAs, smartphones, Radio Network Controller (RNC), Base Transceiver Station (BTS), Mobile Switching Centre (MSC), Base Station Subsystem (BSS), Authentication Center (AuC), data cards, routers, switches, hubs, gateways, and the like.

Although the description herein is with reference to the communication networks described above, the systems and methods may be implemented in other networks and devices, albeit with a few variations, as will be understood by a person skilled in the art. Further, depending on the technology, the communication network 104 includes various network entities or nodes, such as gateways and routers; however, such details have been omitted for ease of understanding.

The communication network 104 may facilitate communication among one or more communication devices 106-1, 106-2, 106-3, ..., 106-N, according to an embodiment of the present subject matter. The communication devices 106-1, 106-2, 106-3, ..., 106-N, may be collectively referred to as communication devices 106. In the network environment 100, the communication devices 106 communicate with each other through the communication network 104. The communication devices 106 may include, without limitation, fixed/wired telephones, hand-held devices, tablet computers, mobile phones, PDAs, smartphones, and the like. Each of the communication devices 106 works on a communication protocol as defined by a communication network 104 to which the communication device 106 is coupled. The communication devices 106 also interact with various nodes or network entities, for example, to avail various communication services or to communicate with other communication devices 106.

The communication devices 106 communicate using nodes 108-1 to 108-n, hereinafter collectively referred to as the nodes 108. Examples of nodes 108 may include routers, switches, bridges, hubs, servers, physical wires, transceivers, duplexers, amplifiers, radio frequency components, and other computer and mobile nodes. The communication devices 106 demand service all the time thus these nodes 108 need to be constantly maintained. In one implementation, these nodes 108 may be maintained by the NMS 102.

In the present implementation, the NMS 102 includes one or more processor(s) 110, I/O interface(s) 112, and a memory 114 coupled to the processor 110. The processors 110 may be a single processing unit or a number of units, all of which could also include multiple computing units. The processors 110 may be implemented as one or more microprocessors, microcomputers, microcontrollers, digital signal processors, central processing units, state machines, logic circuitries, and/or any devices that manipulate signals based on operational instructions. Among other capabilities, the processors 110 are configured to fetch and execute computer-readable instructions and data stored in the memory 114.

Functions of the various elements shown in the figures, including any functional blocks labeled as "processor(s)", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

The I/O interfaces 112 may include a variety of software and hardware interfaces, for example, interface for peripheral device(s), such as a keyboard, a mouse, an external memory, and a printer. Further, the I/O interfaces 112 may enable the NMS 102 to manage other network entities or the nodes 108.

The memory 1 14 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes.

In one implementation, the memory 114 includes modules (not shown in the figure) and data (not shown in the figure). The modules include routines, programs, objects, components, data structures, etc., which perform particular tasks or implement particular abstract data types. The modules further include a Self Organizing Network (SON) module 116, a model generating module 118, a triggering module 120, and other module(s) 122. The other module(s) 122 may include programs or coded instructions that supplement applications and functions of the NMS 102.

On the other hand, the data, amongst other things, serves as a repository for storing data processed, received, and generated by one or more of the modules. The data includes an OAM database 124 and other data 126 generated as a result of the execution of one or more modules in the other modules 122.

The nodes 108 in the communication network 104 are in operation all the time. For example, in a mobile network, the nodes 108 such as amplifiers and duplexers may be in operation for long and continuous duration. It is essential that these nodes 108 operate efficiently for proper functioning of the mobile network. In order to continuously monitor the nodes 108 and their operation, the SON module 116 may be used. As known, the SON module 116 is configured to identify a plurality of nodes from amongst the nodes 108, wherein the plurality of nodes require one or more maintenance activities. For example, the SON module 116 may operate in a conventionally known manner to identify the one or more nodes that require one or more maintenance activities to be performed thereon. In other words, the plurality of nodes identified by SON module 116 may either be malfunctioning or may need upgradation to operate more effectively or to be imparted additional functionalities and therefore may require one or more maintenance activities to be performed thereon. Examples of maintenance activities may include software/hardware update, reboot, component replacement, node replacement, debug log collection, and other fault recovery actions.

To understand the working of SON module 116, a following example may be used. In this example, the SON module 116 may identify a malfunction in certain nodes, say about a hundred nodes, amongst the nodes 108, in the communication network 104. The SON module 116 may also identify a remedy or a maintenance activity to be performed on each of the 100 nodes in order to recover the nodes to an operational state. In one implementation, the SON module 116 may enlist all the hundred nodes with a corresponding maintenance activity. It is possible that different nodes require different maintenance activities to recover. In the present example, however, it may be considered that nodes A, B, C, and D require the same maintenance activity, say a software update followed by a reboot action. Similarly, nodes X, E, F, G and H may need only a reboot action to recover to an operational state.

However, before the maintenance activity is performed on the plurality of nodes, an association among the plurality of nodes is determined by the model generating module 118. In one implementation, the model generating module 118 determines a relationship or association among the plurality of nodes based upon network architecture of the communication network 104. In one example, the network architecture is preexisting with the NMS 102 and is stored in the other data 126. To determine the association, the model generating module 118 generates a dynamic OAM model of the plurality of nodes in real time. The dynamic OAM model may be stored in the OAM database 124 along with a list of maintenance activities. In one implementation, the dynamic OAM model representing association of nodes among the plurality of nodes is indicative of a tree structure of the plurality of nodes. The tree structure depicts the relation among the plurality of nodes. In another example, the dynamic OAM model is indicative of a hierarchy among the plurality of nodes.

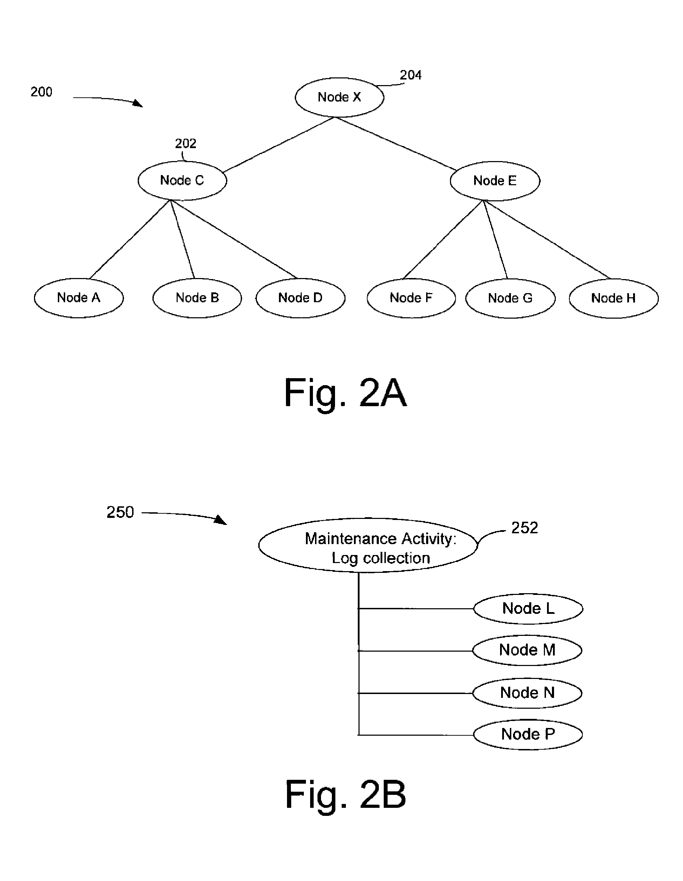

In order to understand the working of the model generating module 118, the previous example may be again referred to. Referring to the above example, after the nodes requiring one or more maintenance activities are identified by the SON module 116, the model generating module 118 may generate the dynamic OAM model 200 (as shown in Figure 2A) for the nodes representing association of nodes. The dynamic OAM model 200 may have a first root 202 and a second root 204. The first root 202 is the parent node C having child nodes A, B, and D that require a software update; whereas the second root 204 is the parent node X having child nodes A to H that need the reboot action.

After the dynamic OAM model of the plurality of nodes is determined by the model generating module 118, a maintenance activity may be performed at the root of the dynamic OAM model thereby optimizing the maintenance activities performed in the communication network 104. For example, as shown in Figure 2A, the roots of the dynamic OAM model 200 are the first root 202 and the second root 204. At first, the maintenance activity i.e., software upgradation is performed on the first root 202 to update the nodes A, B, C, and D simultaneously in a single action, thereby optimizing the maintenance activities performed in the communication network 104. Subsequently, the maintenance activity, i.e., reboot is performed on the second root 204 to reboot the nodes X, and A to H simultaneously in a single action, thereby optimizing the maintenance activities performed in the communication network 104. Therefore, it may be understood that the maintenance activities are triggered at the root(s) of the dynamic OAM models in order to optimize or curtail a number of the maintenance activities performed in the communication network 104.

In another example, the SON module 116 may determine that 50 nodes in the communication network 104 need software update. Subsequently, the model generating module 118 may determine at least one of hierarchies and tree structures of the 50 nodes. The tree structure and hierarchy may help in collating nodes which need maintenance activity of a single type. In the present example, it may be determined that nodes 1-20 need software update of type A; and nodes 21-50 need software update of type B. Therefore, in this example, two dynamic OAM models may be formed; a first dynamic OAM model of nodes 1-20 and a second dynamic OAM model of nodes 21-50. As the dynamic OAM models are based upon maintenance activities to be performed on the nodes, only two maintenance activities may be triggered by the triggering module 120 at respective roots of the two dynamic OAM models. In one example, the two maintenance activities may be software update of type A and software update of type B, which are to be performed to update all 50 nodes, thereby optimizing the maintenance activities performed in the communication network 104. Further, in one embodiment, the need for a network administrator to provide explicit instructions corresponding to each of the 50 nodes may also be eliminated thereby reducing time and effort involved in maintaining the communication network 104.

In yet another example, the SON module 116 may determine that operation quality of nodes L, M, and N in the communication network 104 has degraded. The model generating module 118 may generate a dynamic OAM model 250, as shown in Figure 2B, of the nodes L, M, and N. In the present example, the dynamic OAM model 250 is in form of a tree structure. In the present example, in order to find a cause of the performance degradation, certain analysis has to be done by a customer support teams. To perform this analysis and finding the cause of the performance degradation, the customer support teams may need debug logs to be enabled for a short period of time on the nodes L, M, and N. After the dynamic OAM model 250 of the nodes L, M, and N is built, the maintenance activity, i.e., log collection may be initiated at a root 252 of the dynamic OAM model 250. In one implementation, the log collection may be done in real-time in order to diagnose the degradation issue.

Further, in one implementation, in the ongoing log collection, one more node, such as node P may be added to the dynamic OAM model 250 to collect log of the node P. In the present implementation, the maintenance activity, i.e., log collection may be autonomously initiated by the triggering module 120 at the root 252 without any input from the network administrator. When the log collection is completed, the node P may be removed from the dynamic OAM model 250. In one implementation, the network administrator may also abort and rollback the debug log collection for all of the nodes in the dynamic OAM model 250 by one operation on the root of the dynamic OAM model.

In one implementation, a status of all the nodes 108 present in the communication network 104 may be displayed in the I/O interface 112. Therefore, after a plurality of nodes requiring one or more maintenance activities are identified by the SON module 116, the dynamic OAM model(s) of the plurality of nodes may be displayed on the I/O interface 112 along with the maintenance activities to be performed on the plurality of nodes. A network administrator may provide an input to the triggering module 120 to automatically start running the one or more maintenance activities on the root(s) of the OAM model(s) which are formed based upon the maintenance activity to be performed. In other words, the triggering module 120 may receive a user input to perform the one or more maintenance activities on the plurality of nodes.

In another implementation, the maintenance activities may be triggered autonomously by the triggering module 120 without any input from the network administrator. In one example, the maintenance activities may be triggered autonomously without any input from the network administrator when one or more nodes of the nodes 108 are operating below a threshold level of operating quality. The threshold level of operating quality may be predefined by the network administrator. In another example, certain maintenance activities, such as software updates may be triggered autonomously without any input from the network administrator.

The present subject matter thus enables the NMS 102 to manage the nodes 108 in the communication network 104. Therefore, it may be understood that the NMS 102 may perform any maintenance activity, such as software update, log collection, reboot, changing handover parameters, performing unlock operation on nodes, enabling security on nodes may be performed on several nodes simultaneously by triggering such maintenance activities on roots of dynamic OAM models formed of these nodes, thereby optimizing the maintenance activities performed.

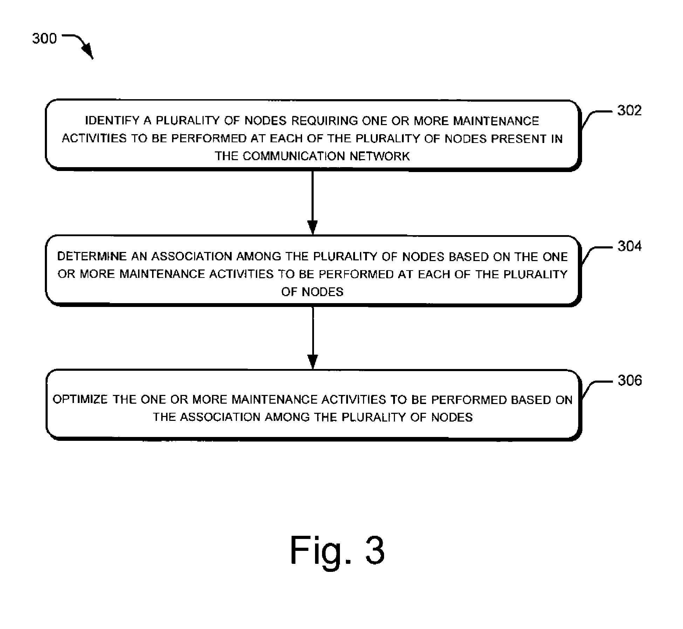

Figure 3 illustrates an exemplary method 300 for maintaining nodes 108 of a communication network 104 by the NMS 102, according to an embodiment of the present subject matter. The order in which the method 300 is described is not intended to be construed as a limitation, and any number of the described method blocks can be combined in any order to implement the method 300, or an alternative method. Additionally, individual blocks may be deleted from the method without departing from the spirit and scope of the subject matter described herein. Furthermore, the methods can be implemented in any suitable hardware, software, firmware, or combination thereof.

A person skilled in the art will readily recognize that steps of the method can be performed by programmed computers. Herein, some embodiments are also intended to cover program storage devices, for example, digital data storage media, which are machine or computer readable and encode machine-executable or computer-executable programs of instructions, wherein said instructions perform some or all of the steps of the described method. The program storage devices may be, for example, digital memories, magnetic storage media, such as a magnetic disks and magnetic tapes, hard drives, or optically readable digital data storage media. The embodiments are also intended to cover both communication network 104 and communication devices 106 configured to perform said steps of the exemplary method.

At block 302, a plurality of nodes requiring one or more maintenance activities are identified. The one or more activities may be performed at each of the plurality of nodes present in the communication network 104. In one implementation, the plurality of nodes may be identified by the SON module 116.

At block 304, an association among the plurality of nodes may be determined. As explained previously, the association may be based on the one or more maintenance activities to be performed at each of the plurality of nodes 108. The association may be indicative of a dynamic OAM model of the plurality of nodes 108. In one implementation, the association may be determined by the model generating module 118.

At block 306, the one or more maintenance activities to be performed may be optimized. The one or more maintenance activities may be optimized based upon the association among the plurality of nodes 108. In one implementation, after the dynamic OAM model is built by the model generating module 118, the maintenance activity may be triggered at a root of the dynamic OAM model, thereby optimizing the maintenance activities performed in the communication network 104. In one implementation, the maintenance activities may be triggered by the triggering module 120.

The present subject matter thus enables the NMS 102 to perform maintenance activities in an optimized manner. The maintenance activities may also include fault management, configuration management, accounting management, performance management, and security management of the nodes 108 in the communication network 104.

Although implementations for managing nodes 108 in a communication network 104 have been described in language specific to structural features and/or methods, it is to be understood that the appended claims are not necessarily limited to the specific features or methods described. Rather, the specific features and methods are disclosed as exemplary implementations for managing nodes 108 in the communication network 104 by the NMS 102.

## Claims

1. A computer implemented method for maintaining a communication network, the method comprising:
identifying a plurality of nodes requiring one or more maintenance activities to be performed at each of the plurality of nodes present in the communication network;
determining an association among the plurality of nodes based on the one or more maintenance activities to be performed at each of the plurality of nodes; and
optimizing the one or more maintenance activities to be performed based on the association among the plurality of nodes.

2. The method as claimed in any one of the preceding claims, wherein the determining comprises generating a dynamic OAM model of the plurality of nodes based upon the one or more maintenance activities to be performed at each of the plurality of nodes.

3. The method as claimed in any one of the preceding claims, wherein the dynamic OAM model is indicative of a tree structure of the plurality of nodes, wherein the one or more maintenance activities to be performed at each of the plurality of nodes is performed at a root of the tree structure.

4. The method as claimed in any one of the preceding claims, wherein the determining comprises ascertaining a hierarchy among the plurality of nodes.

5. The method as claimed in any one of the preceding claims, further comprising triggering the one or more maintenance activities at a root of the plurality of nodes, wherein the root is identified based on the dynamic OAM model.

6. The method as claimed in any one of the preceding claims, wherein the triggering comprising receiving a user input to perform the one or more maintenance activities on the plurality of nodes.

7. The method as claimed in any one of the preceding claims, further comprising autonomously triggering the one or more maintenance activities.

8. The method as claimed in any one of the preceding claims, wherein the autonomously triggering the one or more maintenance activities comprises ascertaining at least one node amongst the plurality of nodes to be operating below a threshold level of operating quality.

9. The method as claimed in any one of the preceding claims, wherein the communication network is a Self Organizing Network.

10. A Network Management System (NMS) (102) for maintenance of a communication network (104), the NMS (102) comprising:
a processor (110);
a memory (114) coupled to the processor (110), the memory (114) comprising;
a Self Organizing Network (SON) module (116) configured to identify a plurality of nodes requiring one or more maintenance activities to be performed at each of the plurality of nodes present in the communication network;
a model generating module (118) configured to determine an association among the plurality of nodes based on the one or more maintenance activities to be performed at each of the plurality of nodes; and
a triggering module (120) configured to trigger the one or more maintenance activities to be performed based on the association among the plurality of nodes.

11. The NMS (102) as claimed in any one of the preceding claims, further comprising an Input/Output (I/O) interface (112) for displaying a status of the plurality of nodes to a network administrator.

12. The NMS (102) as claimed in any one of the preceding claims, wherein model generating module (118) is further configured to:
ascertain a hierarchy among the plurality of nodes; and
generate a dynamic OAM model of the plurality of nodes based on the hierarchy and the one or more maintenance activities to be performed at each of the plurality of nodes, wherein the dynamic OAM model is indicative of a tree structure of the plurality of nodes.

13. The NMS (102) as claimed in any one of the preceding claims, wherein the triggering module (120) is configured to perform the one or more maintenance activity at a root of the tree structure, wherein the root is identified based on the dynamic OAM model.

14. The NMS (102) as claimed in any one of the preceding claims, wherein the triggering module (120) is further configured to receive a user input to perform the one or more maintenance activities on the plurality of nodes.

15. The NMS (102) as claimed in any one of the preceding claims, wherein the triggering module (120) is further configured autonomously trigger the one or more maintenance activities when at least one node amongst the plurality of nodes is operating below a threshold level of operating quality.

16. A computer-readable medium having embodied thereon a computer program for executing a method for maintaining a communication network, the method comprising:
identifying a plurality of nodes requiring one or more maintenance activities to be performed at each of the plurality of nodes present in the communication network;
determining an association among the plurality of nodes based on the one or more maintenance activities to be performed at each of the plurality of nodes; and
optimizing the one or more maintenance activities to be performed based on the association among the plurality of nodes.
